# EUROPÄISCHE PATENTSCHRIFT

(11) **EP 0 467 829 B1**
(45) Veröffentlichungstag und Bekanntmachung des Hinweises auf die Patenterteilung: **29.09.1993**
(21) Anmeldenummer: 91810511.5
(22) Anmeldetag: 01.07.1991
(51) Int. Cl.: B60J 5/04

(54) **Als Hohlprofil ausgebildeter Aufprallträger für Fahrzeugtüren**
Hollow profile for the construction of side impact resisting beams for vehicle door
Profil creux pour la fabrication de poutre antichoc pour porte de véhicule automobile

(30) Priorität: 16.07.1990 CH 2363/90
(43) Veröffentlichungstag der Anmeldung: 22.01.1992
(73) Patentinhaber: ALUSUISSE-LONZA SERVICES AG, 8034 Zürich (CH)
(72) Erfinder: Frank, Simon, W-7708 Watterdingen (DE)

(56) Entgegenhaltungen:
- EP-A- 0 267 895

## Beschreibung

Die Erfindung betrifft einen als Hohlprofil ausgebildeten Aufprallträger für Fahrzeugtüren, insbesondere für Türen von Personenkraftwagen, nach dem Oberbegriff von Anspruch 1.

Aufprallträger sind aus der DE-A-36 06 024 bekannt und werden in den Fahrzeugtüren zur Sicherung der Fahrzeuginsassen gegen quer zur Fahrtrichtung angreifende, also seitliche Verformungskräfte bei Kollision vorgesehen. Zwar vermögen diese Aufprallträger gegenüber jenen I-förmigen Querschnittes nach EP-A-0 063 325 eine bessere Formfestigkeit gegen Verwindung bei einer Aufprallverformung anzubieten, jedoch können auch sie bei sehr grosser Aufnahmekraft hin und wieder brechen.

Nach der DE-A-37 09 489 sollen Aufprallträger weitergehend so verbessert werden, dass sie bei geringem Gewicht ein hohes Mass an Formhaltigkeit bei ausreichendem Kompensationsvermögen für die auftretende Verformungsenergie aufweisen und bei einem Aufprall eine kontrollierbare Gestalt bei unversehrtem Innengurt annehmen. Hierzu wird der Aussengurt des Aufprallträgers etwa in seiner Längsmitte mit einem Paar von Randeinformungen versehen, von denen jede in einem Abstand zu sowie an unterschiedlichen Seiten von einer Querebene durch den Aufprallträger liegt.

Die Entlastungskerben nach DE-A-37 09 489 wirken der Durchbiegung des Aufprallträgers beim Seitenaufprall entgegen, der bei sehr hohen Streckgrenzen-Verhältnissen von > 9,5 : 1 zum Bruch in der Endphase der Verformung neigt.

Aus der EP-A-0 267 895 ist ein als Hohlprofil ausgebildeter Aufprallträger bekannt, dessen Druckgurt durch Borhungen im mittleren Teil geschwächt ist.

Angesichts dieser Gegebenheiten hat sich der Erfinder die Aufgabe gestellt, noch grössere Sicherheit gegen eine Schwächung des Hohlprofils anzubieten, dem Einknicken des Träger-Druckgurtes weitergehend entgegenzuwirken und eine gleichmässige Verformung zu erreichen.

Zur Lösung dieser Aufgabe führt ein Aufprallträger mit den kennzeichnenden Merkmalen von Anspruch 1.

Der erfindungsgemässe Aufprallträger wird also ausserhalb des Träger-Schwerpunktes durch Löcher im Druck- oder Aussengurt geschwächt, die erst bei einer grösseren Verformung das Einschnüren des Zug- oder Innengurts im Trägerschwerpunkt verhindert; der Aussengurt schiebt sich im Bereich der Ausnehmungen oder Bohrungen zusammen, und der Aufprallträger verformt sich gleichmässig um den Biegekörper. Da sich die Durchmesser der Bohrungen von der äusseren Bohrung zur Längsmitte hin vermindern, ist die Vergleichmässigung der Verformung gewährleistet.

Als vorteilhaft hat sich zudem erwiesen, den Durchmesser der jeweils der Stirnkante des Aufprallträgers nächstliegenden Bohrung gleich oder geringfügig kleiner zu wählen als die innere Breite des Hohlprofils.

Wie Versuche ergeben haben, verformt sich dank dieser Massgabe der Aufprallträger gleichmässig bogenförmig, ohne dass es zu einem Bruch käme. Innengurt und Aussengurt werden -- in Sicht von oben -- etwa U-förmig gebogen und bleiben ansonsten unversehrt. Beim Verformungsvorgang entsteht dank der Randeinformungen im Metall des Aufprallträgers ein günstiger Materialfluss, und gefährliche Materialanhäufungen im Bereich der Aufprallstelle werden vermieden.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
- Fig. 1:: die Frontansicht einer Fahrzeugtür mit darin vorgesehenem Aufprallträger;
- Fig. 2:: einen Abschnitt eines in etwa natürlicher Größe und geschnittener Schrägsicht dargestellten Aufprallträgers mit einem Innen- und einem Außengurt;
- Fig. 3:: den gegenüber den natürlichen Maßen vergrößerten Querschnitt durch einen anderen Aufprallträger;
- Fig. 4:: die Seitenansicht eines Aufprallträgers;
- Fig. 5:: die Draufsicht auf den Außengurt des Aufprallträgers der Fig. 4;
- Fig. 6:: die skizzenhafte Wiedergabe des Aufprallträgers während seiner Verformung;
- Fig. 7:: einen Ausschnitt der Draufsicht auf den verformten Aufprallträger;
- Fig. 8:: die schematisierte Draufsicht auf den Außengurt eines anderen Aufprallträgers;
- Fig. 9:: den Aufprallträger der Fig. 8 während seiner Verformung.

In einer Fahrzeugtür 10 für einen aus Gründen der Übersichtlichkeit nicht wiedergegebenen Personenkraftwagen verläuft innerhalb eines geschlossenen unteren Türkastens 11 ein stranggepreßtes Aluminiumprofil als Aufprallträgers 20. Dessen Abstand i von der oberen Kante 14 des Türkastens 11 ist größer als die Absenktiefe einer in einem Rahmen 12 erkennbaren Fensterscheibe 13.

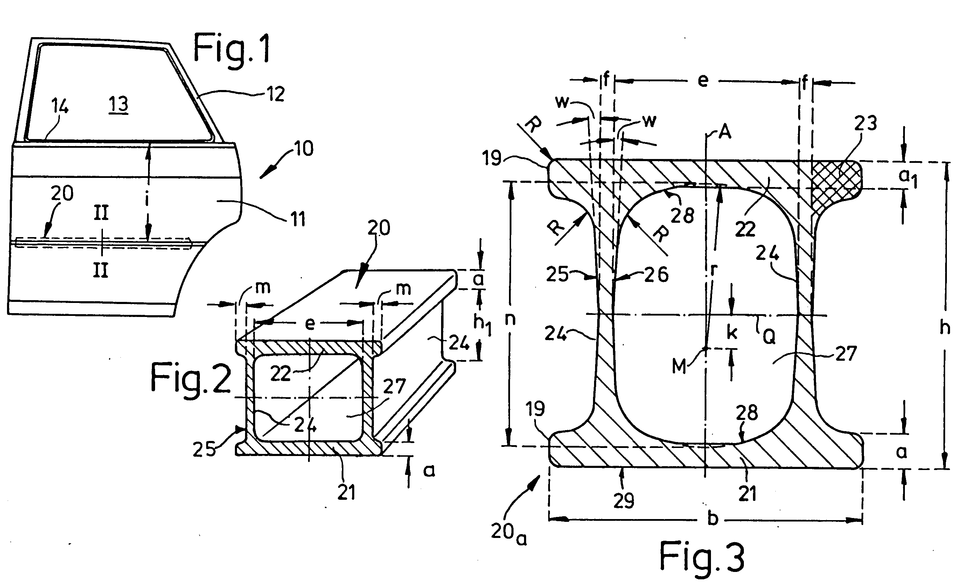

Der Aufprallträger 20 weist gemäß Fig. 2 querschnittlich zwei in Abstand h₁ von beispielsweise 24 mm zueinander parallele Wände einer Dicke a von hier 4 mm auf, die in Einbaulage des Aufprallträgers 20 einen zum Fahrzeuginneren gerichteten Innengurt 21 sowie einen der Türaußenfläche benachbarten Außengurt 22 bilden. Letzterer ist mit dem Innengurt 21 durch zwei schmale Querwände 24 zu einem Hohlprofil mit Profilkammer 27 ergänzt. Die Kammerbreite e beträgt hier 30 mm.

Sowohl Innengurt 21 als auch Außengurt 22 -- nachfolgend auch Gurtwände genannt -- kragen beidseits um ein Maß m über die Außenflächen 25 der Querwände 24 hinaus und bilden so Wulstabschnitte 23 (siehe Fig. 3, oben rechts).

Beim Aufprallprofil 20 nach Fig. 3 einer Gesamthöhe h von beispielsweise 27,4 mm, einer Gesamtbreite b von 38 mm und einer Höhe a der Profilwandlängskanten 19 von 4,7 mm ist deutlich zu erkennen, daß eine parallel zu den Querwänden 24 gerichtete Hauptachs A ebenso eine Symmetrieachse für den Querschnitt bildet wie eine sie kreuzende Querachse Q. Auf der Hauptachse A liegt in einem Abstand k (etwa 5 mm) von der Querachse Q der Mittelpunkt M für einen Radius r (etwa 20 mm), welcher die innere Querschnittskontur der hier eine entsprechend gekrümmte Innenseite 28 anbietenden Gurtwände 21, 22 bestimmt; deren mittlere Dicke a₁ beträgt hier 3 mm, so daß eine lichte Kammerhöhe n von etwa 32 mm entsteht.

An beide Gurtwände 21,22 stoßen die Querwände 24 mittleren inneren Abstands e von 22,4 mm -- einer Dicke f von hier 1,8 mm an der Querachse Q -- mit gerundeten Übergangen an. Die Außenfläche 25 und die Innenfläche 26 der Querwand 24 sind von jenem Übergang bis zur Querachse Q in Winkeln w von 2,5° zueinander geneigt, so daß insoweit ein sich zur Querachse Q hin konisch verjüngender Querschnitt der Querwand 24 entsteht.

Der an beiden Enden in einer Ebene E abgeschrägte Aufprallträger 20 weist beispielsweise für den Einbau in eine Vordertür eine Gesamtlänge q₁ von etwa 974 mm auf. Jene Ebene E schließt mit der Trägerinnenseite 29 des Innengurts 21 einen spitzen Winkel t ein. Durch diesen schräggelegten Schnitt entsteht eine Stirnkante 30, die aus der Ebene F der ursprünglichen Kontur der Trägerinnenseite 29 in einem Versetzungsmaß v aufwärts versetzt ist.

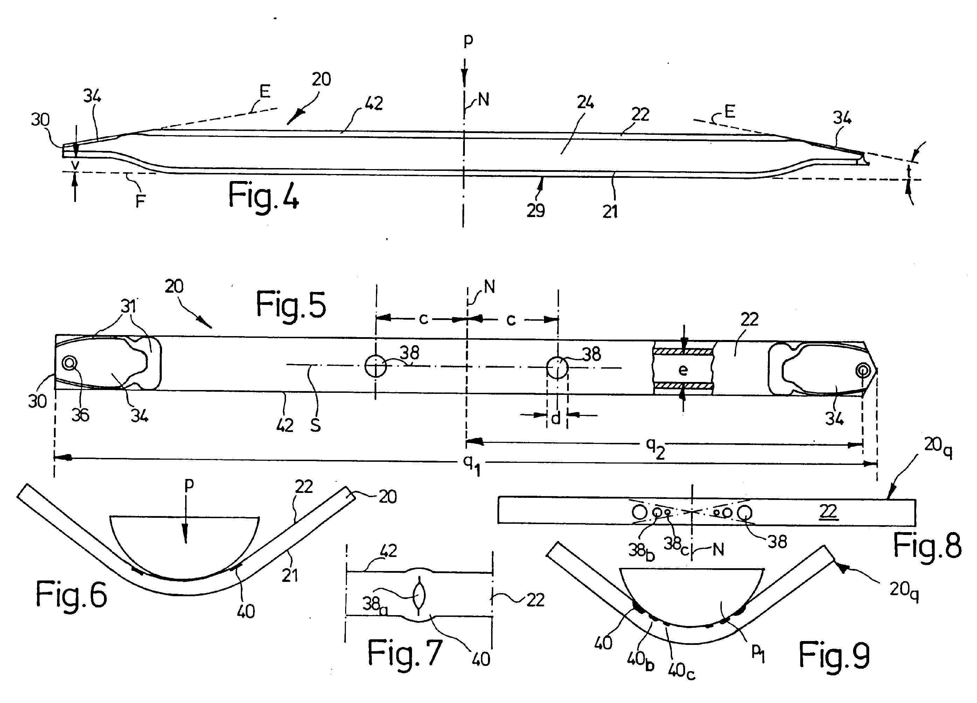

In Draufsicht nach Fig. 5 ist die durch den beschriebenen Schnittvorgang in der Ebene E entstehende Schrägfläche 31 zu erkennen, die sich aus Schnittflächen der Querwände 24 und des Innenflansches 21 zusammensetzt sowie U-förmiger Gestalt ist.

Die in Fig. 4 durch einen Pfeil P angedeutete Kraftrichtung bei einem Aufprall läßt die weiter oben beschriebene Lage des Aufprallträgers 20 in der Türkonstruktion besonders deutlich werden: Die Kraft P trifft in einer angenommenen Geraden N auf den Außengurt 22, der sich zum Wageninnenraum hin zu verformen trachtet. Der Abstand der in Profillängsmitte liegenden Geraden N von der Einspannstelle -- Bohrung 36 im Innengurt 21 -- ist in Fig. 5 mit q₂ bezeichnet. Die durch die beschriebene Schnittebene E und die dazu erläuterte Verkröpfung der Trägerinnenseite 29 entstandenen Profilenden 34 werden in nicht dargestellte Sicken des Türrahmens eingelegt und mittels die Bohrungen 36 durchsetzender Schrauben befestigt.

In den Außengurt 22 ist in Fig. 5 beidseits der von der Geraden N als Symmetriegeraden bestimmten Querschnittsebene in gleichen Mittelabständen c von ihr in dessen Mittellinie S eine Bohrung 38 des Durchmessers d eingebracht, der hier geringfügig kürzer als das Maß der Innenbreite e des Aufprallträgers 20 ist.

Die Fig. 6,7 zeigen schematisch die Verformung des Aufprallträgers 20 durch Aufprall. Dank der Bohrungen 38 fließt um diese in den Bereichen 40 der Werkstoff unter Bildung von teilkreisartigen Wulstkonturen an der Gurtlängskante 42 und die Bohrung 38 wird zum bohnenartigen Schlitz 38ₐ.

Beim Aufprallträger 20_{q} der Fig. 8,9 sind zwischen Bohrung 38 und Profillängsmitte N beispielhaft zwei weitere Bohrungen 38_{b} bzw. 38_{c} jeweils gegenüber der benachbarten Bohrung 38 bzw. 38_{b} geringeren Durchmessers vorhanden, die beim Verformen des Aufprallträgers 20_{q} ein entsprechendes Fließverhalten des Werkstoffes in Bereichen 40,40_{b},40_{c} verursachen - der Aufprallträger 20_{q} verformt sich gleichmäßig um den die Biegung verursachenden Körper P₁.

## Patentansprüche

1. Aufprallträger für Fahrzeugtüren, insbesondere für Türen von Personenkraftwagen, der als Hohlprofil aus einer Leichtmetallegierung auf dem Wege des Strangpressens hergestellt und in der Fahrzeugtür etwa in Fahrtrichtung verlaufend beidends so festlegbar ist, dass eine Profilwand des Aufprallträgers (20,20q) als Innengurt (21) zum Fahrzeuginnenraum weist und eine dazu in Abstand vorgesehene zweite Profilwand des Aufprallträgers einen Aussengurt (22) bildet, wobei der Aussengurt (22) des Aufprallträgers (20,20q) beidseits seiner Längsmitte (N) mit mehreren Bohrungen (38, 38b, 38c) versehen ist,
dadurch gekennzeichnet,
dass der Durchmesser dieser Bohrungen (38,38b,38c) jeweils von der einer Stirnkante (30) des Aufprallträgers (20q) nächstliegenden Bohrung (38) zur Längsmitte (N) hin abnimmt.

2. Aufprallträger nach Anspruch 1, dadurch gekennzeichnet, dass der Durchmesser (d) der jeweils der Stirnkante (30) des Aufprallträgers (20q) nächstliegenden Bohrung (38) gleich oder geringfügig kürzer ist als die innere Breite (e) des Hohlprofils.

## Claims

1. Impact bar for vehicle doors, especially for doors of passenger cars, which is produced as a hollow profile section by extrusion from a light metal alloy and can be fixed to either end of the vehicle door extending approximately in the direction of travel in such a manner that one profile wall of the impact bar (20, 20_{q}) forms an inner flange (21) facing towards the interior of the vehicle and a second profile wall of the impact bar provided at a distance therefrom forms an outer flange (22), the outer flange (22) of the impact bar (20, 20_{q}) being provided on either side of its longitudinal centre (N) with a plurality of bores (38, 38_{b}, 38_{c}), characterised in that the diameter of these bores (38, 38_{b}, 38_{c}) decreases from each bore (38) nearest one end edge (30) of the impact bar (20_{q}) to the longitudinal centre (N).

2. Impact bar according to claim 1, characterised in that the diameter (d) of each bore (38) nearest the end edge (30) of the impact bar (20_{q}) is equal to or slightly shorter than the inner width (e) of the hollow profile section.

## Revendications

1. Barre de renfort pour portes de véhicule, notamment pour portes de véhicules légers, qui est constituée par un profilé creux en alliage de métal léger, fabriqué par le procédé du filage à la presse, et qui peut être fixé dans la porte du véhicule à ses deux extrémités, en s'étendant à peu près dans le sens de la marche, de telle manière qu'une paroi du profilé de la barre de renfort (20, 20_{q}) soit dirigée vers le volume intérieur du véhicule, en constituant une semelle intérieure (21) et qu'une deuxième paroi de profilé de la barre de renfort, prévue à distance de la première, forme une semelle extérieure (22), la semelle extérieure (22) de la barre de renfort (20, 20_{q}) étant munie de plusieurs perçages (38, 38b, 38c) de part et d'autre du milieu (N) de sa longueur,
caractérisée
en ce que le diamètre de ces perçages (38, 38b, 38c) décroît du perçage (38) le plus proche d'une extrémité frontale (30) de la barre de renfort (20_{q}) vers le milieu (N) de la longueur.

2. Barre de renfort selon la revendication 1, caractérisée en ce que le diamètre (d) du perçage (38) le plus proche de l'extrémité frontale (30) de la barre de renfort (20_{q}) est égal ou légèrement inférieur à la largeur intérieure (e) du profilé creux.
